# EUROPEAN PATENT APPLICATION

(11) **EP 4 455 178 A1**
(43) Date of publication of application: **30.10.2024**
(21) Application number: 23170825.6
(22) Date of filing: 28.04.2023
(51) Int. Cl.: C08G 18/10, C08G 18/50, C08G 18/75

(54) **CURABLE COMPOSITIONS COMPRISING AT LEAST ONE SILANE-MODIFIED POLYMER**

(71) Applicant: Henkel AG & Co. KGaA, 40589 Düsseldorf (DE)
(72) Inventor: Schaefer, Sascha, 40822 Mettmann (DE); Helpenstein, Klaus, 41199 Mönchengladbach (DE); Butt, Haseeb Shahdin, 40589 Düsseldorf (DE); Winkels, Tim, 41066 Mönchengladbach (DE)

(57) **Abstract**

The invention relates to a curable composition comprising
I. at least one silane-modified polymer obtainable by reacting
(A) at least one polymer terminated with amine groups at both ends, which polymer is selected from polyester, polyether polyols, poly(meth)acrylates, polyolefins, and/or copolymers of the aforementioned and has a molecular weight M_{w} between 250 and 10,000 Dalton,
(B) at least one cycloaliphatic diisocyanate compound, and
(C) at least one secondary aminosilane with two hydrolysable groups;
II. surface treated silica;
III. surface treated calcium carbonate;
IV. at least one additional aminosilane;
V. optionally, at least one adhesion promoter;
VI. optionally, at least one pigment;
VII. optionally, at least one catalyst;
VIII. optionally, at least one plasticizer.

The invention also relates to adhesive, sealant, and/or coating materials comprising said composition and the use of said composition.

## Description

The invention relates to curable compositions comprising at least one silane-modified polymer, and optionally a curing catalyst, wherein said composition have excellent mechanical strength. The invention also relates to adhesives, sealants, and/or coating materials comprising said composition and use of said composition.

Elastic bonding and sealing materials are used in many different applications ranging from building and construction, assembly, mobility and many more. These materials can absorb mechanical and thermal stress and are key to provide reliability to devices, buildings and vehicles during their lifetime. Especially in the rail industry, elastic polyurethane and silane-modified polymer-based products are used in the assembly in the interior as well as the exterior. A main focus is the bonding and sealing of windows, so called dgx type applications.

Usually, polyurethane based adhesives (PUs) are used in the assembly of vehicles when it comes to the use of elastic bonding and sealing applications. They have proven to be reliable, cost-effective, easy to use and they show very good mechanical properties. However, remaining isocyanates in the product are under investigation and considered as problematic in terms of health and safety. Besides, polyurethane-based adhesives show weaknesses in tolerance of UV irradiation, paintability and often require a priming step.

On the other hand, use of silane-modified polymers (SMPs)-based adhesives have also been contemplated, since they usually do not require a priming step, have an increased UV stability compared to PUs, a broader working temperature range and usually do not comprise residual isocyanates. However, so far SMPs have not been able to reach comparable bond strength including a similar elongation like PUs.

It was therefore the objective of the present invention to find possibilities to overcome the disadvantages and drawbacks of conventional materials discussed above. In particular, the present invention aimed at adhesives, sealant, and/or coating materials, which exhibit an excellent combination of properties including material reliability, cost-efficiency, easy usability, excellent mechanical properties, good health and safety profile, good tolerance of UV irradiation, good paintability and allow for easy implementation in applications.

The present invention has achieved said objectives by providing a curable composition in accordance with claim 1. Preferred embodiments of said curable composition are described in the depending claims. In addition, particularly suitable applications of said curable composition are protected by a further independent product claim and a further independent use claim.

The present invention provides a curable composition comprising
I. at least one silane-modified polymer obtainable by reacting
   (A) at least one polymer terminated with amine groups at both ends, which polymer is selected from polyester, polyether polyols, poly(meth)acrylates, polyolefins and/or copolymers of the aforementioned and has a molecular weight M_{w} between 250 and 10,000 Dalton,
   (B) at least one cycloaliphatic diisocyanate compound, and
   (C) at least one secondary aminosilane with two hydrolysable groups;
II. surface treated silica;
III. surface treated calcium carbonate;
IV. at least one additional aminosilane;
V. optionally at least one adhesion promoter;
VI. optionally at least one pigment;
VII. optionally at least one catalyst;
VIII optionally at least one plasticizer.

The present invention also relates to an adhesive, sealant, or coating material comprising said curable composition, and to use of said curable composition as an adhesive, sealant, or coating material.

The solution of the present invention is advantageous in several aspects. The present invention shows possibilities to overcome the disadvantages and drawbacks of conventional materials discussed above. In particular, the present invention provides adhesives, sealants, and/or coating materials, which exhibit an excellent combination of properties including
∘ a very good material reliability;
∘ a very high cost-efficiency of the claimed solution;
∘ a very easy usability of the claimed, usually no priming step is required for application of the materials of the invention;
∘ excellent mechanical properties, similar to conventional PUs, including excellent Shore A, elongation and tensile strength of the cured material. The materials of the claimed invention can be advantageously used in bonding of substrates to each other with significant higher bond strength as well as elongation than usually found for silane-modified adhesives. Usually, a tensile strength of 5 MPa or higher of the cured composition and an elongation of 450% or higher of the cured composition is achieved, whereas formulations obtained with a primary aminosilane with two leaving groups or a secondary amine with three leaving groups did not show comparable results in tensile strength or elongation;
∘ very good health and safety profile because of reducing and at best avoiding of harmful substances, such as remaining isocyanates in the materials of the invention;
∘ very good tolerance of UV irradiation, especially compared to conventional PUs;
∘ very good paintability.

Finally, the solution of the invention can be easily implemented in applications, especially because of excellent curing behavior, as illustrated by outstanding skin overtime, TFT and depth of cure. The materials of the invention are particularly suited for commercial applications in dgx, window bonding and sealing, interior and exterior bonding and sealing, especially in the rail and automotive industry.

The term "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In preferred embodiments, the curable composition of the present invention is a moisture curable composition.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements or method steps. If used, the phrase "consisting of" is closed and excludes all additional elements. Further, the phrase "consisting essentially of" excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of ±20%, preferably ±10% of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights (Mₙ), unless otherwise stipulated. All molecular weight data refers to values obtained by gel permeation chromatography (GPC) carried out using Water 2695 HPLC equipped with 3 Polypore columns and using a RI detector at 35 °C. Stabilized Tetrahydrofuran (THF) was used as eluent at 1 mL/min flow rate. The calibration of the device was carried out using polystyrene standards.

As used herein, "polydispersity" refers to a measure of the distribution of molecular mass given in a resin sample. The polydispersity is calculated by dividing the weight average molecular weight (M_{w}) by the number average molecular weight (Mₙ).

For convenience in the description of the process of this invention, unsaturation provided by CH₂=CH-CH₂- terminal groups is referred to as "allyl" unsaturation.

As used herein, the term "hydrocarbon residue" is intended to refer to radicals or diradicals which are primarily composed of carbon and hydrogen atoms. Thus, the term encompasses aliphatic groups such as alkyl, alkenyl, and alkynyl groups; aromatic groups such as phenyl; and alicyclic groups, such as cycloalkyl and cycloalkenyl.

As used herein, "C₁-C₈ alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C₈ alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include cyclopropyl; cyclobutyl; cyclopentyl; cyclohexyl; cycloheptyl; cyclooctyl; adamantane; and, norbornane.

As used herein, a "C₆-C₁₈ aryl" group used alone or as part of a larger moiety - as in "aralkyl group" - refers to optionally substituted, monocyclic, bicyclic and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include phenyl; indenyl; naphthalenyl; tetrahydronaphthyl, tetrahydroindenyl; tetrahydroanthracenyl; and, anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C₂₀ alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

As used herein, the term "alkenylene" group refers to a divalent aliphatic hydrocarbon group having at least one carbon-carbon double bond that is a radical of an alkene. An alkenylene group can be linear or branched and substitutes or unsubstituted.

As used herein, the term "alkynylene" group refers to a divalent aliphatic hydrocarbon group having at least one carbon-carbon triple bond, that is a radical of an alkyne. An alkynylene group can also have one or more carbon-carbon double bonds. An alkynylene group can be linear or branched and substituted or unsubstituted.

As used herein, the term "arylene" group refers to a divalent group that is a radical of an aryl group. Suitable arylene group includes phenylene, furanylene, piperidylene, and naphthylene.

As used herein, the term "aralkylene" group refers to a divalent group that is a radical of an aralkyl group. An aralkylene can be represented by the formula -R-Ar- where R is an alkylene and Ar is an arylene, i.e., an alkylene is bonded to an arylene. Suitable aralkylene groups includes xylylene and toluenylene.

Where mentioned, the expression "contain at least one heteroatom" means that the main chain or side chain of a residue comprises at least one atom that differs from carbon atom and hydrogen. Preferably the term "heteroatom" refers to nitrogen, oxygen, silicon, sulfur, phosphorus, halogens such as Cl, Br, F. Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic or fused compound containing at least one heteroatom, preferably O, S, N, and/or P, in the ring structure.

As used herein, the term "halogen" refers to fluorine, chlorine, bromine or iodine and correspondingly the term "halide" denotes fluoride, chloride, bromide, or iodide anions.

The term "pseudohalogen" refers to inorganic or organic groups which, when in the form of anions exhibit chemical properties similar to those of the halide ions. Pseudohalogen groups include, although are not exclusive to, azido (N₃), thiocyano (SCN) and cyano (CN).

According to the present invention, the curable composition comprises at least one silane-modified polymer (I), which is obtainable by reacting
(A) at least one polymer terminated with amine groups at both ends, which polymer is selected from polyester, polyether polyols, poly(meth)acrylates and/or polyolefins and copolymers of the aforementioned and has a molecular weight M_{w} between 250 and 10,000 Dalton,
(B) at least one cycloaliphatic diisocyanate compound, and
(C) at least one secondary aminosilane with two hydrolysable groups.

Preferably, at least one polymer terminated with amine groups at both ends is a polyether polyol with amine groups at both ends, which preferably has the formula (E I)

H₂N-CHCH₃CH₂-(OCH₂CHCH₃)ₓₓ-(OCH₂CH₂)_{yy}-(OCH₂CHCH₃)_{zz}-NH₂ (E I)

wherein (OCH₂CH₂)_{yy} specifies polyethylene glycol (PEG) repeating units and (OCH₂CHCH₃)ₓₓ and (OCH₂CHCH₃)_{zz} specify polypropylene glycol (PPG) comprised in said at least one polymer terminated with amine groups at both ends, wherein at least one of xx, yy and zz is within the range from 1 to 250; preferably within the range from 2 to 100; more preferably within the range from 3-50. More preferably, yy is within the range from 10 to 70; in particular within the range from 30 to 45; and xx + zz is within the range from 1 to 20; in particular within the range from 4 to 8.

Said repeating units can be comprised in any order in said at least one polymer terminated with amine groups at both ends, i.e., polymer terminated with amine groups at both ends according to formula (E I) comprises homopolymers, random copolymers, block copolymers, sequential copolymers, etc. However, PEG homopolymers, PPG homopolymers and PEG-PPG-random copolymers are preferred.

In formula (E I), at least one of xx and yy is preferably within the range from 1 to 250; preferably within the range from 2 to 100; more preferably within the range from 3-50. More preferably, both xx and yy are, independently of one another, within the range of from 1 to 250; even more preferably within the range of from 2 to 100; especially within the range of from 3-50.

In addition, at least one polymer terminated with amine groups at both ends preferably has a weight average molecular weight M_{w} within the range of from 500 to 10,000 Dalton, more preferably within the range of from 1,000 to 7,000 Dalton, especially within the range of from 1,500 to 3,500 Dalton.

Furthermore, at least one polymer terminated with amine groups at both ends preferably has an average amine hydrogen equivalent weight (AHEW) within the range of from 200 g/eq to 800 g/eq, more preferably within the range of from 350 g/eq to 800 g/eq, especially within the range of from 500 g/eq to 650 g/eq.

In that context, the average amine hydrogen equivalent weight describes the equivalent weight of an amine. For example, if the average amine hydrogen equivalent weight is 575g/eq, 575 g of material will have one N-H group or 575*2=1,150 g of material will have 2 N-H groups or 3*575=1 ,725 g of material will have 3 N-H groups, wherein in the present invention a NH₂ group of said polymer terminated with amine groups at both ends (I) is considered to have 2 N-H groups.

Said at least one cycloaliphatic diisocyanate is preferably selected from the group consisting of cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane (isophorone diisocyanate, IPDI), 2,4-hexahydrotoluylene diisocyanate, 2,6-hexahydrotoluylene diisocyanate, hexahydro-1,3- phenylene diisocyanate or hexahydro-1 ,4-phenylene diisocyanate; partially or completely hydrogenated cycloalkyl derivatives of benzidine diisocyanate, naphthalene-1,5-diisocyanate, xylylene diisocyanate (XDI), tetramethylxylylene diisocyanate (TMXDI), 1,3-phenylene diisocyanate, 1,4-phenylene diisocyanate, 2,4-toluylene diisocyanate (2,4-TDI), 2,6-toluylene diisocyanate (2,6-TDI), especially completely hydrogenated 2,4-TDI and 2,6-TDI (H6-2,4- and 2,6-TDI), 2,4'-diphenylmethane diisocyanate, 2,2'-diphenylmethane diisocyanate, 4,4'-diphenylmethane diisocyanate (MDI), especially completely hydrogenated MDI (H12-MDI), alkyl-substituted diphenylmethane diisocyanates, especially mono-, di- , tri-, or tetraalkyldiphenylmethane diisocyanate, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4-diisocyanate, 1-bromomethylphenyl-2,6-diisocyanate, 3,3'-bis-chloromethyl ether-4,4'-diphenyl diisocyanate; and mixtures of two or more of the named diisocyanates.

More preferably, the cycloaliphatic diisocyanate is selected from the group, 1-isocyanato-3,3,5-trimethyl-5-isocyanatomethylcyclohexane (isophorone diisocyanate, IPDI), completely hydrogenated 2,4-toluylene diisocyanate (H6-2,4-TDI), completely hydrogenated 2,6-toluylene diisocyanate (H6-2,6-TDI) and completely hydrogenated 4,4'-diphenylmethane diisocyanate (H12-MDI).

In the present invention, secondary aminosilane refer to amines, in which two hydrogen atoms of the amine have been substituted with a group different from hydrogen.

Preferably, at least one secondary aminosilane has the formula (E II)

H-N(R'²)ₐ(R'¹-SiXYZ)_{2-a'} (E II)

wherein
a' is 0 or 1;
R'¹ is a divalent hydrocarbon residue having 1 to 12 carbon atoms and linking the N and Si atom;
X, Y, Z are, independently of one another, selected from the group consisting of a hydroxyl group, a C₁ to C₁₂ alkyl, or a C₁ to C₁₂ alkoxy group with the proviso that if a' is 0 one of X, Y or Z is a hydrolysable group, preferably an alkoxy group; and if a' is 1 two of X, Y or Z are a hydrolysable groups, preferably alkoxy groups;
R'² is hydrogen or a hydrocarbon residue having 1 to 12 carbon atoms.

During the formation of the silane-modified polymer (I) the secondary amino silane loses a hydrogen atom so the amino silane terminal group of the silane-modified polymer (I) comprises -N(R'²)_{a'}(R'¹-SiXYZ)_{2-a'}.

In preferred embodiments, the secondary amino silanes are monopodal having the formula H-N(R'²)_{a'}(R'¹-SiXYZ)_{2-a'} wherein a' is 1. Preferred examples of some useful monopodal aminosilane compounds include N-(n-butyl)-3-aminopropylmethyldimethoxysilane, (N-2-aminoethyl)-3-aminopropylmethyldimethoxysilane, 3-aminopropylmethyldiethoxysilane, N-(n-butyl)-3-aminopropylmethyldimethoxysilane, 1-butanamino-4-(dimethoxymethylsilyl)-2,2-dimethyl, (N-cyclohexylaminomethyl)-methyldiethoxysilane, (N-phenylaminomethyl)-methyldimethoxysilane, 3-(N,N-dimethylaminopropyl)aminopropylmethyldimethoxysilane, and mixtures thereof.

In other preferred embodiments, the amino silanes are bipodal having the general formula H-N(R'²)_{a'}(R'¹-SiXYZ)_{2-a'} wherein a' is 0. Bipodal amino silanes can advantageously provide increased crosslinking of the silane terminated polymer compared to monopodal amino silanes.

The preferred silane-modified polymer thus comprises two linking points at which the condensation of the polymers can be completed, splitting off the hydrolyzed residues in the presence of atmospheric moisture. In this way, regular and rapid crosslinkability is achieved so that bonds with good strength can be obtained. In addition, by means of the quantity and the structure of the X, Y and Z hydrolysable groups, preferably by using dialkoxysilyl groups, methoxy groups or longer residues - the configuration of the network that can be controlled to be a long-chain system (thermoplastics) or a relatively wide-mesh three-dimensional network (elastomers) or a highly crosslinked system (thermosets) so that inter alia the elasticity, flexibility and heat resistance of the finished crosslinked terpolymer compositions can be influenced in this way. In general, the disclosed silane-modified polymers comprising dialkoxysilyl end groups have highly reactive linking points which permit rapid curing, high degrees of crosslinking and thus good final strengths. One advantage of dialkoxysilyl groups lies in the fact that, after curing, the corresponding compositions are more elastic, softer and more flexible than systems comprising trialkoxysilyl groups. They are therefore suitable in particular for use as sealants. In addition, they split off little alcohol during curing and are therefore of particular interest when the quantity of alcohol released is to be reduced.

A preferred process for forming the silane-modified polymer (I) is as follows. At least one polymer terminated with amine groups at both ends, which polymer is selected from polyester, polyether polyols, poly(meth)acrylates and/or polyolefins and copolymers thereof and has a molecular weight M_{w} between 250 and 10,000 Dalton, preferably at least one polyether polyol, is provided in a reaction vessel and preferably placed under vacuum at an elevated temperature (for example, 170 °F) until the moisture level is less than 300 parts per million. Vacuum is replaced with dry nitrogen and catalyst can optionally be added to the mixture. At least one cycloaliphatic diisocyanate compound is added to said at least one polymer terminated with amine groups at both ends, preferably in presence of at least one catalyst, and preferably in presence of at least one plasticizer. Subsequently, at least one secondary aminosilane with two hydrolysable groups is added to the reaction mixture, wherein preferably stoichiometric amount of said secondary amino silane are used to form the silane-modified polymer (I). Other additives can optionally be added to the silane-modified polymer (I) to form a composition.

Preferred silane-modified polymers (I) include α-silane and γ-silane type modified polymers. The silane-modified polymers generally refer to silane-modified polyether polyols, i.e., polymers featuring hydrolysable silyl groups at the terminal ends of the respective prepolymer main chain.

According a preferred embodiment of the invention, the curable composition comprises at least one compound of Formula (I)

Y-[(CR¹₂)_{b}-SiRₐ(OR²)₃₋ₐ]ₓ (I)

wherein, in Formula (I),
Y denotes an x-valent polymer radical bonded via nitrogen, oxygen, sulfur or carbon,
R is independently selected from a monovalent, optionally substituted, SiC-bonded hydrocarbon radical,
R¹ is independently selected from hydrogen or a monovalent, optionally substituted hydrocarbon radical which may be attached to the carbon atom via nitrogen, phosphorus, oxygen, sulfur or carbonyl group, R² is independently selected from hydrogen or a monovalent, optionally substituted hydrocarbon radical,
x is an integer from 1 to 10, preferably 1, 2 or 3, especially preferably 1 or 2,
a is 1, and
b is independently selected from an integer from 1 to 10, preferably 1, 3 and 4, particularly preferably 1 and 3, in particular 1.

Examples of radicals R are alkyl radicals, such as the methyl, ethyl, n-propyl, iso-propyl, 1-n-butyl, 2-n-butyl, iso-butyl, tert. pentyl radical; hexyl radicals, such as the n-hexyl radical; heptyl radicals, such as the n-heptyl radical; octyl radicals, such as the n-octyl radical, iso-octyl radicals and the 2,2,4-trimethylpentyl radical; nonyl radicals, such as the n-nonyl radical; decyl radicals, such as the n-decyl radical; dodecyl radicals, such as the n-dodecyl radical; octadecyl radicals, such as the n-octadecyl radical; cycloalkyl radicals, such as cyclopentyl, cyclohexyl, cycloheptyl and methylcyclohexyl radicals; alkenyl radicals, such as vinyl, 1-propenyl and 2-propenyl radicals; aryl radicals, such as the phenyl, 2-propenyl and 2-propenyl radicals; and phenyl-, naphthyl, anthryl and phenanthryl radicals; alkaryl radicals, such as o-, m-, p-tolyl radicals, xylyl radicals and ethylphenyl radicals; and aralkyl radicals, such as the benzyl radical, the α- and the β-phenylethyl radical.

The R radical is preferably a monovalent hydrocarbon radical having 1 to 6 carbon atoms which is optionally substituted by halogen atoms, particularly preferably an alkyl radical having 1 or 2 carbon atoms, in particular methyl radical.

Examples of radicals R¹ are hydrogen atoms, the radicals indicated for R and optionally substituted hydrocarbon radicals bonded to the carbon atom via nitrogen, phosphorus, oxygen, sulfur, carbon or carbonyl groups.

Preferably, R¹ is hydrogen and hydrocarbon radicals with 1 to 20 carbon atoms, especially hydrogen.

Examples of R² are hydrogen or the examples given for R.

Preferably, the R² radicals are hydrogen or alkyl radicals containing 1 to 10 carbon atoms, optionally substituted by halogen atoms, particularly preferably alkyl radicals containing 1 to 4 carbon atoms, in particular the methyl and ethyl radicals.

For the purposes of the present invention, polymers on which the polymer residue Y is based, are all polymers in which at least 50%, preferably at least 70%, particularly preferably at least 90%, of all bonds in the main chain are carbon-carbon, carbon-nitrogen or carbon-oxygen bonds. Polymer residues Y are preferably organic polymer residues which are polyoxyalkylenes, such as polyoxyethylene, polyoxypropylene, polyoxybutylene, polyoxytetramethylene, polyoxyethylene-polyoxypropylene copolymer and polyoxypropylene-polyoxybutylene copolymer as polymer chain; which preferably are bonded to each group -[(CR¹₂)_{b}-SiRₐ(OR²)₃₋ₐ]ₓ via -NH-C(=O)-NH-, -NR'-C(-O)-NH- , NH-C(=O)-NR'-, wherein R' may be the same or different and has a meaning specified for R, or represents a group -CH(COOR")-CH₂-COOR", wherein R" can be the same or different and has the meaning specified for R. Examples of radicals R' include cyclohexyl-, cyclopentyl-, n- and iso-propyl-, n-, iso- and t-butyl-, the various stereoisomers of the pentyl radical, hexyl radical or heptyl radical and the phenyl radical. R' is preferably a group - CH(COOR")-CH₂-COOR" or an optionally substituted hydrocarbon radical having 1 to 20 carbon atoms, particularly preferably a linear, branched or cyclic alkyl group having 1 to 20 carbon atoms or an aryl group having 6 to 20 carbon atoms, which is optionally substituted by halogen atoms; R" is preferably an alkyl group having 1 to 10 carbon atoms, particularly preferably a methyl, ethyl or propyl radical.

In Formula (I), the radical Y preferably denotes polyester radicals, polyether polyol radicals, poly(meth)acrylate radicals and/or polyolefin radicals, or copolymer radicals thereof, more preferably polyoxyalkylene radicals, especially polyoxypropylene radicals.

Compounds of Formula (I) can have the groups -[(CR¹₂)_{b}-SiRₐ(OR²)₃₋ₐ]ₓ bound in the manner described at any desired position in the polymer, such as located at the terminal ends or located in between the terminal ends, i.e. as side groups of the polymer main chain, particularly preferably at the terminal ends of the polymer chain.

The end groups of the compounds according to Formula (I) are preferably those of the Formula (III)

-NH-C(=O)-NR'-(CR¹₂)_{b}-SiRₐ(OR²)₃₋ₐ (III),

wherein the residues and indices are as above defined.

Particularly, a compound according to Formula (I) may denote silane-terminated polyester, silane-terminated polyether polyols, silane-terminated poly(meth)acrylates, silane-terminated polyolefins and/or copolymers of the aforementioned, more preferably silane-terminated polyethers, in particular silane-terminated polypropylene glycols having dimethoxymethylsilyl, trimethoxysilyl, diethoxymethylsilyl or triethoxysilyl end groups bonded via -NH-C(=O)-NR'-(CR¹₂)_{b}-groups, wherein R', R¹ and b are as defined above.

The average molecular weights Mₙ of the compounds according to Formula (I) are preferably at least 400 g/mol, particularly preferably at least 600 g/mol, in particular at least 800 g/mol and preferably at most 30,000 g/mol, particularly preferably at most 19,000 g/mol, in particular at most 13,000 g/mol.

According to various preferred embodiments, the curable composition comprises at least one polymer having at least one silane-functional group of the Formula (IV)

-Xₒ-R³-Si(R⁴)ₖ(R⁵)₃₋ₖ (IV),

wherein
X is a divalent linking group containing at least one heteroatom;
R³ is selected from divalent hydrocarbon residues having 1 to 12 carbon atoms;
each R⁴ is, independently of one another, selected from a hydrocarbon radical containing 1 to 20 carbon atoms and each R⁵ is, independently of one another, selected from a hydroxyl group or a hydrolysable group, wherein R⁴ and R⁵ are substituents directly bound with the Si atom or the two of the substituents R⁴ and R⁵ form a ring together with the Si atom to which they are bound;
k is 1 or 2; and
o is 1.

In this context, the divalent bonding group (linking group) X comprising at least one heteroatom is understood to be a divalent chemical group which links the polymer backbone of the polymer with the residue R³ of the Formula (IV).

In various embodiments, the divalent linking group X in the Formula (IV) is urea.

The urea group can be obtained if a terminal secondary amino group on the polymer is used, which reacts with a terminal isocyanate group that is present in the respective reactant. This means that a polymer that is terminally substituted with an amino group is reacted with an isocyanatosilane. Urea groups advantageously increase the strength of the polymer chains and of the overall crosslinked polymer.

In preferred embodiments, the linking group X is -N(R")-C(=O)-N(R")-, wherein R" is defined above.

The index "o" corresponds to 1, i.e., the linking group X links the polymer backbone with the residue R³ (o = 1).

The residue R³ is a divalent hydrocarbon residue having 1 to 12 carbon atoms. The hydrocarbon residue can be a linear, branched or cyclic alkylene residue and can be substituted or unsubstituted. The hydrocarbon residue can be saturated or unsaturated. In preferred embodiments, R³ is a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, R³ is a methylene, ethylene or n-propylene, in particular a methylene or n-propylene.

Alkoxysilane-functional compounds having a methylene group as binding link to the polymer backbone - so-called "α silanes" - have a particularly high reactivity of the silyl group.

In general, a lengthening of the binding hydrocarbon chain leads to reduced reactivity of the polymers. In particular, "γ silanes" - which comprise the unbranched propylene residue as binding link - have a balanced ratio between necessary reactivity (acceptable curing times) and delayed curing (open assembly time, possibility of corrections after bonding).

R⁴ and R⁵ are substituents directly bound with the Si atom or the two of the substituents R⁴ and R⁵ can form a ring together with the Si atom to which they are bound. In preferred embodiments, R⁴ and R⁵ are the substituents directly bound with the Si atom.

Each R⁴ in the Formula (IV) is, independently of one another, selected from a hydrocarbon radical containing 1 to 20 carbon atoms, preferably C₁ to Ca alkyl groups, more preferably a methyl or an ethyl.

Each R⁵ in the Formula (IV) is, independently of one another, selected from a hydroxyl group or a hydrolysable group, preferably C₁ to Ca alkoxy groups, or C₁ to Ca acyloxy groups.

In preferred embodiments, each R⁵ is, independently of one another, selected from C₁ to Ca alkoxy groups, in particular methoxy, ethoxy, i-propyloxy or i-butyloxy group. Since k is 1, combinations of more than one group are also possible. However, acyloxy groups, such as an acetoxy group -O-CO-CH₃, can also be used as hydrolysable groups.

In preferred embodiments, k is 1.

In particularly preferable embodiments, the silyl group, i.e., -Si(R⁴)k(R⁵)₃₋ₖ, is selected from alkyldialkoxysilyl, preferably selected from methyldimethoxysilyl or ethyldiethoxysilyl, most preferably methyldimethoxysilyl. Alkoxy groups are advantageous, since no substances which irritate mucous membranes are released during the curing of compositions comprising alkoxy groups. The alcohols formed by hydrolysis of the residues are harmless in the quantities released, and evaporate.

In general, polymers comprising dialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups. They are therefore suitable in particular for use as sealants but can also serve as adhesives. In addition, they split off even less alcohol during curing and are therefore of particular interest when the quantity of alcohol released is to be reduced.

Methoxy and ethoxy groups as comparatively small hydrolysable groups with low steric bulk are very reactive and thus permit a rapid cure, even with low use of catalyst. They are therefore of particular interest for systems in which rapid curing is desirable.

Interesting configuration possibilities are also opened up by combinations of the two groups. If, for example, methoxy is selected for one of the R⁵ and ethoxy for the other R⁵ within the same alkoxysilyl group, the desired reactivity of the silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolysable groups, which by nature exhibit lower reactivity. This is of particular interest if delayed curing is also to be achieved by means of the configuration of the alkoxy groups.

The silane-functional group of Formula (IV) can be a lateral group within the polymer chain of the respective polymer or a terminal group of the respective polymer. In preferred embodiments, the silane-functional group of Formula (IV) is a terminal group of the polymer.

In preferred embodiments, the polymer has two silane-functional groups of Formula (IV). In this case, the polymer can have at least one lateral silane-functional group of Formula (IV) and at least one terminal silane-functional group of Formula (IV); or, at least two lateral silane-functional groups of Formula (IV); or, at least two terminal silane-functional groups of Formula (IV).

In particularly preferred embodiments, the polymer has two terminal silane-functional groups of Formula (IV). Then, each polymer chain comprises two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolysable groups - for example by using methoxy groups or longer residues - the configuration of the network that can be achieved as a long-chain system (thermoplastics), relatively wide-mesh three-dimensional network (elastomers) or highly crosslinked system (thermosets) can be controlled, so that inter alia the elasticity, flexibility and heat resistance of the finished crosslinked compositions can be influenced in this way.

In preferred embodiments, the polymer backbone of the polymer is selected from polyester, polyethers, poly(meth)acrylates, polyolefins or copolymers of at least two polymers, such as polyether and poly(meth)acrylic acid ester copolymers.

A "polyether", "polyoxyalkylene", or "polyalkylene glycol", as used interchangeably herein, is understood to be a polymer in which the organic repeating units comprise ether functionalities C-O-C in the main chain. Examples for such polymers are polypropylene glycol and polyethylene glycol and copolymers thereof. Polymers having lateral ether groups, such as cellulose ethers, starch ethers and vinyl ether polymers, as well as polyacetals such as polyoxymethylene (POM) are not included in the polyethers.

In particularly preferred embodiments, the silane-modified polymer has a polyether backbone. Polyethers have a flexible and elastic structure, with which compositions having excellent elastic properties can be produced. Polyethers are not only flexible in their backbone, but at the same time strong. Thus, for example, polyethers are not attacked or decomposed by water and bacteria, in contrast to, e.g., polyesters, for example.

The number average molecular weight Mₙ of the polyether on which the polymer is based is for preference 500 to 100,000 g/mol (Daltons), more preferably 500 to 50,000, particularly preferably 1,000 to 30,000 and in particular 2,000 to 20,000 g/mol, most preferably 8,000 to 20,000 g/mol. Number average molecular weights of at least 500 g/mol are advantageous for the polyethers of the present invention since the corresponding compositions have a balanced ratio of viscosity (ease of processing), strength and elasticity.

A "polyol" is understood to be a compound which contains at least two OH groups, irrespective of whether the compound contains other functional groups. However, a polyol used in accordance with the present invention preferably contains only OH groups as functional groups or, if other functional groups are present, none of these other functional groups is reactive at least to isocyanates under the conditions prevailing during the reaction of the polyol(s) and diisocyanate(s).

The polyols to be used in accordance with the invention have an OH value of preferably about 1 to about 250.

Besides the polyethers, the polyol mixture may contain other polyols. For example, it may contain polyester polyols with a molecular weight of about 200 to about 30,000.

The amount of one or more silane-modified polymers (I), i.e., one type of silane-modified prepolymer or different kinds of silane-modified prepolymers, i.e., two or more different kinds of silane-modified prepolymers, as herein defined above, is typically in the range of about 10 to about 95 wt.-%, preferably in the range of about 10 to about 90 wt.-%, even more preferably in the range of about 15 to about 85 wt.-%, for instance about 15, 16, 17, 18, 19, 20, 21, 22, 23, 24, 25, 26, 27, 28, 29, 30, 31, 32, 33, 34, 35, 36, 37, 38, 39, 40, 45, 50, 55, 60, 65, 70, 75, 80 or 85 wt.-%, based on the total weight of curable composition.

According to preferred embodiments, the curable composition in accordance with the claimed invention comprises one plasticizer (VIII).

Examples of optionally employed plasticizers are dimethylpolysiloxanes which are liquid at room temperature under a pressure of 1013 hPa and are terminated with trimethylsiloxy groups, in particular having viscosities at 20° C. in the range between 20 and 5,000 mPas; organopolysiloxanes which are liquid at room temperature under a pressure of 1,013 hPa and consist substantially of SiO_{3/2}, SiO_{2/2}, and SiO_{1/2} units, referred to as T, D, and M units; and also high-boiling hydrocarbons, such as, for example, paraffin oils or mineral oils consisting substantially of naphthenic and paraffinic units.

The optionally employed plasticizer (a-3) preferably comprises linear polydimethylsiloxanes having trimethylsilyl end groups.

The curable composition in accordance with the claimed invention can furthermore contain hydrophilic plasticizers. These are used to improve the moisture absorption and thereby to improve the reactivity at low temperatures. Suitable as plasticizers are, for example, esters of glutaric acid, ester of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C4-16 alcohols or mixtures of two or more different ethers of such alcohols, for example, dioctyl ether (obtainable as Cetiol OE, BASF, Düsseldorf).

Endcapped polyethylene glycols are also suitable as plasticizers, for example, polyethylene or polypropylene glycol di-C1-4-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

The curable composition in accordance with the claimed invention may contain the plasticizer preferably in an amount of 0 to 40% by weight, preferably in an amount of 0 to 30% by weight based in each case on the total weight of the curable composition in accordance with the claimed invention.

If a mixture of plasticizers is used, the amounts refer to the total amount of plasticizers in the curable composition in accordance with the claimed invention.

The curable composition in accordance with the claimed invention comprises surface-treated calcium carbonate (III).

Preferred surface treated calcium carbonate particles comprise a treatment layer on the surface of the calcium carbonate particles comprising
i. a phosphoric acid ester blend of one or more phosphoric acid mono-ester and salty reaction products thereof and/or one or more phosphoric acid di-ester and salty reaction products thereof, and/or
ii. at least one saturated aliphatic linear or branched carboxylic acid and salty reaction products thereof, and/or
iii. at least one aliphatic aldehyde and/or salty reaction products thereof, and/or
iv. at least one mono-substituted succinic anhydride consisting of succinic anhydride mono-substituted with a group selected from a linear, branched, aliphatic and cyclic group having a total amount of carbon atoms from at least C₂ to C₃₀ in the substituent and/or salty reaction products thereof, and/or
v. at least one polydialkylsiloxane, and/or
vi. mixtures of the materials according to i. to iv.

Particularly preferred surface treated calcium carbonate particles comprise a hydrophobic coating and are preferably coated with alkylsilane with comprising 4 to 22 carbon atoms e.g., hexadecyltrimethoxysilane, hexadecyltriethoxysilane, octyltriethoxysilane, octyltrimethoxysilane and others or aliphatic carboxylic acid or a salt thereof. Saturated or unsaturated carboxylic acids comprising 4 to 22 carbon atoms, preferably comprising 6 to 16 carbon atoms, more preferably comprising 10 to 12 carbon atoms are also particularly preferred for said coating, wherein saturated carboxylic acids are most preferred. In that context, use of lauric acid and of stearic acid, especially of stearic acid is particularly favored.

The curable composition in accordance with the claimed invention comprises surface-treated silica (II).

The silica preferably has a BET surface area of 5 to 250 m²/g. When it is used, it can cause additional increase in the viscosity of the curable composition in accordance with the claimed invention to achieve a thixotropic formulation and it can contribute to strengthening the cured composition.

It is likewise conceivable to use silica with a BET surface area, advantageously with 100 to 250 m²/g, particularly 110 to 170 m²/g, as a filler. Because of the higher BET surface area, the same effect, e.g., strengthening of the cured composition, can be achieved at a smaller weight proportion of silicic acid. Further substances can thus be used to improve the composition described herein in terms of other requirements.

The curable composition in accordance with the claimed invention comprises at least one additional aminosilane and/or aminosilane oligomer (IV), preferably as adhesion promoters.

Said additional aminosilanes may be selected from 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-aminoethyl)-3-aminopropyltriethoxysilane, diethylenetriaminopropyltrimethoxysilane, phenylamino-methyl-trimethoxy-silane, (N-2-aminoethyl)-3-aminopropylmethyldimethoxysilane, 3-(N-phenylamino)propyl-trimethoxysilane, 3-piperazinylpropylmethyldimethoxysilane, 3-(N,N-dimethylaminopropyl)amino-propylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyl-triethoxysilane, 3-(N,N-diethylamino)propyltrimethoxysilane, 3-(N,N-diethylamino)-propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamine, 4-amino-3,3-dimethylbutyltrimethoxy silane, 4-amino-3,3-dimetylbutyltriethoxy silane, N-(n-butyl)-3-aminopropyltrimethoxysilane, and mixtures thereof, particularly preferably of 3-aminopropyltrimethoxysilane, 3-aminopropyltriethoxysilane, aminomethyltrimethoxysilane, aminomethyltriethoxysilane, 3-(N,N-dimethylamino)propyl-trimethoxysilane, 3-(N,N-dimethylamino)propyltriethoxysilane, (N,N-dimethylamino)methyl-trimethoxysilane, (N,N-dimethylamino)methyltriethoxysilane, 3-(N,N-diethylamino)propyltrimethoxysilane, 3-(N,N-diethylamino)-propyltriethoxysilane, (N,N-diethylamino)methyltrimethoxysilane, (N,N-diethylamino)methyl-triethoxysilane, bis(3-trimethoxysilyl)propylamine, and bis(3-triethoxysilyl)propylamine, 4-amino-3,3-dimethylbutyltrimethoxy silane, 4-amino-3,3-dimetylbutyltriethoxy silane, or N-(n-butyl)-3-aminopropyltrimethoxysilane, or oligomers obtained from the condensation of at least one of the above-mentioned aminosilanes, or mixtures thereof. The above-mentioned monomeric aminosilanes or oligomers can be oligomerized together with alkyl-, alkenyl- or aryl-alkoxysilanes, preferably methyltri(m)ethoxysilane, ethyltri(m)ethoxysilane, propyltri(m)ethoxysilane, vinyltri(m)ethoxysilane, n-butyltri(m)ethoxysilane, isobutyltri(m)ethoxysilane, phenyltri(m)ethoxysilane, and/or octyltri(m)ethoxysilane.

In various embodiments, the curable composition in accordance with the claimed invention further comprise at least one additional aminosilane as described above, in particular one of the tertiary aminosilanes. *"Tertiary aminosilane",* as used herein, refers to an aminosilane wherein the nitrogen atom of the amino group is covalently linked to three non-hydrogen residues.

According to preferred embodiments, the curable composition in accordance with the claimed invention comprises at least one curing catalyst, preferably selected from tin catalysts, titanium catalysts, aluminum catalysts, or zirconium catalysts, more preferably tin catalysts or titanium catalysts, or mixtures thereof.

In various embodiments, the curing catalyst may be a tin compound, preferably an organotin compound or an inorganic tin salt. Tin in these tin compounds is preferably bivalent or tetravalent. The curing catalyst can be added to the composition particularly as a crosslinking catalyst. Suitable inorganic tin salts are, for example, tin(II) chloride and tin(IV) chloride. Organotin compounds (tin organyles) are used preferably as the tin compounds, however. Suitable organotin compounds are, for example, the 1 ,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, nonadecylic acid, myristic acid, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1 ,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) oxide (e. g. di-n-octyltin oxide) or dialkyltin(IV) dicarboxylate, particularly di-n-butyltin dilaurate, di-n-butyltin diacetate, or di-n-octyltin dilaurate.

Additionally, or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1 ,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1 ,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(OR^{z})₄,

wherein R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

wherein R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates, halogenated zirconium catalysts, or zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Won and titanium carboxylates are very particularly preferred.

Further, phosphorous containing organic compounds or mixtures thereof can be used as alternative to metal based catalysts. Examples are triethylphosphat or 2-ethylhexyl-phosphat.

Alternatively strong Bronstedt acids, especially organic acids such as dodecylbenzenesulfonic acid can be used as catalysts.

The curable composition in accordance with the claimed invention can comprise at least one additional auxiliary substance, preferably selected, for example, from the group consisting of plasticizers, extenders, stabilizers, antioxidants, fillers, reactive diluents, drying agents, UV stabilizers, rheological aids, thixotropy modifiers and/or solvents. Of particular importance are typically plasticizers, fillers, thixotropy modifiers and stabilizers, comprising antioxidants and UV stabilizers.

Preferably, the curable composition in accordance with the claimed invention therefore contain at least one auxiliary substance.

It is conceivable that the viscosity of the curable composition in accordance with the claimed invention is too high for certain applications. It can then be reduced in a simple and expedient way usually by using a reactive diluent, without any signs of demixing (e.g., plasticizer migration) occurring in the cured mass.

Solvents and/or plasticizers can be used, in addition to or instead of a reactive diluent, for reducing the viscosity of the curable composition in accordance with the claimed invention.

Suitable as solvents are aliphatic or aromatic hydrocarbons, halogenated hydrocarbons, ketones, ethers, esters, ester alcohols, keto alcohols, keto ethers, keto esters, and ether esters.

However, curable compositions in accordance with the claimed invention that are free of organic solvents may be preferred due to ecological and/or health concerns. In various embodiments, the curable composition in accordance with the claimed invention is thus substantially free of organic solvent.

In the context of the present invention, the term "substantially free" refers to compositions comprising less than about 1 wt.-%, preferably less than about 0.5 wt.-%, more preferably less than about 0.1 wt.% of the respective ingredient. For instance, a composition substantially free of organic solvent comprises, in the context of the present invention, less than about 1 wt.-% organic solvent.

In preferred embodiments, the curable composition in accordance with the claimed invention comprises the following components in the stated proportions by weight:
(i) 5 % by weight to 70 % by weight, preferably 15 % by weight to 50 % by weight, of said at least one silane-modified polymer, based on the total weight of the composition; and/or
(ii) 0.01 % by weight to 10 % by weight, preferably 0.05 % by weight to 3 % by weight of said surface treated silica, based on the total weight of the curable composition; and/or
(iii) 1 % by weight to 80 % by weight by weight, preferably 20 % by weight to 50 % by weight of said surface treated calcium carbonate, based on the total weight of the curable composition; and/or
(iv) 0.01 % by weight to 15 % by weight, preferably to 1 % by weight to 7.5 % by weight of said at least one additional aminosilane, based on the total weight of the curable composition; and/or
(v) 0 % by weight to 5 % by weight, preferably 0.05 % to 2 % by weight, of said at least one catalyst, based on the total weight of the curable composition;
wherein the proportions by weight preferably add up to 100 wt.-%.

With regard to the preferred representatives of the individual components and the preferably used quantities thereof, the statements made above in the description of the respective components apply.

The preparation of the curable composition of the claimed invention can take place by simple mixing of the at least one silane-modified polymer (I), the surface treated silica (II), the surface treated calcium carbonate (III), and the at least one additional aminosilane, and optionally the other ingredients described herein. This can take place in suitable dispersing units, e.g., a high-speed mixer.

In this case, preferably, care is taken that the curable composition of the present invention does not come into contact with moisture as far as possible, which could lead to an undesirable premature curing. Suitable measures are sufficiently known and comprise, for example, working in an inert atmosphere, possibly under a protective gas, and drying/heating of individual components before they are added.

The invention also relates to an adhesive, sealant, or coating material comprising the curable composition according to the invention.

The invention further relates to the use of the curable composition according to the invention as an adhesive, sealant, or coating material.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Moreover, although the foregoing descriptions describe some example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following examples serve to illustrate the invention, but the invention is not limited thereto.

### Examples

Unless otherwise stated, the examples which follow are carried out at a pressure of the surrounding atmosphere, in other words approximately at 1,000 hPa, and at room temperature, in other words at approximately 23° C., and/or at a temperature which comes about when the components are combined at room temperature without additional heating or cooling, and also at a relative atmospheric humidity of approximately 50%. Furthermore, all figures for parts of percentages, unless otherwise stated, are by weight.

The formulations were prepared as described in the tables below, wherein the component were added to the reaction vessel in the following order: 1. polyetheramine, 2. plasticizer, 3. catalyst, 4. diisocyanate, 5. secondary aminosilane, 6. stabilizer, 7. water scavenger.

The resulting product was subjected to curing performance tests as follows:
Tensile strength and elongation: The tensile strength and elongation at break were determined in accordance with DIN 53504. The samples were cured in a mold at room temperature over seven days. The specimen type S2 (Dog bone) was used and the speed of the pull head in the dynamometer was 200mm/min.
Skin-over time (SOT): Skin-over time (SOT) is defined as the time required for the material to form a non-tacky surface film. The determination of the skin over time is carried out according to DIN 50014 under standard climate conditions (23 +/- 2°C, relative humidity 50 +/- 5%). The temperature of the sealant must be 23 +/- 2°C, with the sealant/adhesive stored for at least 24 h beforehand in the laboratory. The sealant/adhesive is applied to a sheet of paper and spread out with a putty knife to form a skin (thickness about 2 mm, width about 7 cm). The stopwatch is started immediately. At intervals, the surface is touched lightly with the fingertip and the finger is pulled away, with sufficient pressure on the surface that an impression remains on the surface when the skin formation time is reached. The skin-over time is reached when sealing compound no longer adheres to the fingertip. The skin-over time (SOT) is expressed in minutes.
Surface tackiness (TFT): To determine surface tackiness from an adhesive sealing material, the aforementioned compositions were homogenized and applied in a frame (50mmx130mmx 2 mm) in the same way as the SOT determination. After 60 minutes, the tackiness of the surface was evaluated using a tool which has a rounded spatula at the tip (150mmx5mm) by careful contact with the surface of the polymer film, TFT of "< 60 min" indicates "not tacky" and of "> 60 min" indicates "tacky (including slightly tacky)".
Shore A hardness: Shore A hardness was measured according to ISO 868.
Depth of cure (DOC): A strip of the material with a height of 10 mm (+/- 1 mm) and width of 20 mm (+/-2 mm) was applied over a plastic foil (PP) using a Teflon spatula. After storing the sample for 24 hours at normal conditions (23 +/- 2 °C, relative humidity 50 +/- 5 %), a section of the strip was cut off and the thickness of the cured layer was measured with a caliper. The depth of cure after 24 hours is expressed in millimeters.
Peel test: If possible and needed, substrate (test panel) is cleaned prior to application using a suitable solvent (e.g., isopropanol, acetone). A bead of the material with a height of 10 mm (+/-1 mm) and width of 20 mm (+/- 2 mm) was applied over the substrate using a Teflon spatula / cartridge and cartridge gun. The sample was stored for 7 days at normal conditions (23 +/- 2 °C, relative humidity 50 +/- 5 %). The cured material was cut back for at least 15mm with a shape blade and the bead pulled by hand. Failure mode was recorded as *"cf 60", "cf 100",* wherein *"cf XX"* refers to XX% of wetted surface shows cohesive break.
af (1-3): adhesion failure, additional evaluation: rating scale from 1="strong adhesion" to 3="no adhesion"

**Table 1**

| component | Comparative Example 1 [wt.%] | Comparative Example 2 [wt.%] | Example 3 [wt.%] |
|---|---|---|---|
| polyetherdiamine¹ | 61.52 | 61.52 | 61.52 |
| glutaric acid dimethylester² | 10.00 | 10.00 | 10.00 |
| dioctyltin laurate³ | 0.0158 | 0.0158 | 0.0158 |
| isophorone diisocyanate | 12.56 | 12.56 | 12.56 |
| 3-(dimethoxy methyl silyl) propylamine | 13.22 | | |
| N-(n-butyl)-3-aminopropyltrimethoxysilane⁴ | | 13.22 | |
| amino silane N-(n-butyl)-3-aminopropylmethyldimethoxysilane | | | 13.22 |
| bis(2,2,6,6-tetramethyl-4-piperidyl)sebaceate⁵ | 1.14 | 1.14 | 1.14 |
| Vinyltrimethoxysilane⁶ | 1.55 | 1.55 | 1.55 |

| | | | |
|---|---|---|---|
| ¹: Jeffamine ED2003 available from Huntsman Corporation (USA); predominately based on a PEG backbone terminated with amine groups at both ends according to formula (E-I) with yy≈39 and xx+zz≈6; M_{w}: 2,000; average Amine Hydrogen Equivalent Weight (AHEW): 575 g/eq ²: DBE-5 dibasic ester available from Sigma-Aldrich, an affiliate of Merck KGaA (Germany); plasticizer ³: TIB Kat 216 available from Nantong Haotai Products & Chemicals Co., Ltd.; catalyst ⁴: Dynasylan 1189 available from Evonik Industries AG (Germany) ⁵: Tinuvin 770 from BASF AG (Germany); stabilizer ⁶: Geniosil XL 10 from Wacker Chemie AG (Germany); water scavenger | | | |

**Table 2**

| component | Comparative Example 4 | Comparative Example 5 | Comparative Example 6 | Example 7 | Example 8 |
|---|---|---|---|---|---|
| Comparative Example 1 | 15.20 | | | | |
| Comparative Example 2 | | 19.50 | 14.70 | | |
| Example 3 | | | | 35.47 | 35.47 |
| glutaric acid dimethylester² | 3.00 | 3.00 | 3.00 | 7.00 | 7.00 |
| carbon black⁷ | 0.30 | 0.30 | 0.30 | 0.70 | 0.70 |
| ultrafine surface treated precipitated calcium carbonate⁸ | 10.00 | 6.00 | 10.50 | 23.33 | |
| ultrafine surface treated precipitated calcium carbonate⁹ | | | | | 23.33 |
| hydrophobic pyrogenic silica treated with dimethyl dichlorsilane¹⁰ | 0.30 | / | 0.30 | 0.70 | 0.70 |
| 3-aminopropyl trimethoxy silane¹¹ | 0.60 | 0.60 | 0.60 | 1.40 | 1.40 |
| Vinyltrimethoxysilane⁷ | 0.30 | 0.30 | 0.30 | 0.70 | 0.70 |
| dioctyltin laurate³ | 0.30 | 0.30 | 0.30 | 0.70 | 0.70 |

| | | | | | |
|---|---|---|---|---|---|
| ⁷: Printex 60 available from Orion Engineered Carbon S.A. (USA) ⁸: Socal U1S1 G available from Imerys S. A. (France) ⁹: Viscoexcel 30 available from Omya AG (Switzerland) ¹⁰: Aerosil 974 available from Evonik Industries AG (Germany) ¹¹: Geniosil GF 96 available from Wacker Chemie AG (Germany) | | | | | |

**Table 3**

| | Comparative Example 4 | Comparative Example 5 | Comparative Example 6 | Example 7 | Example 8 |
|---|---|---|---|---|---|
| Skin over time (SOT) [min] | 147 | 55 | 42 | 243 | 240 |
| TFT [h] | <24 | <24 | <24 | <24 | <24 |
| Depth of cure [mm/24h] | 3.3 | 3.9 | 4.8 | 3.8 | 3.9 |
| Shore A hardness 7d | 70 | 55 | 69 | 59 | 59 |
| Elongation | 233 | 290 | 150 | 642 | 576 |
| Tensile strength | 4.95 | 5.66 | 4.27 | 7.15 | 5.14 |

**Table 4: Adhesion test**

| Sample | Comparative Example 5 | Example 7 | Example 7 | Example 8 | Example 8 |
|---|---|---|---|---|---|
| Storage condition¹² | A2/1 | A2/1 | A2/2 | A2/1 | A2/2 |
| PVC | cf100 | cf100 | cf100 | cf100 | cf100 |
| PMMA | af1 | cf100 | cf100 | af1 | cf100 |
| Glass | cf100 | af2 | af2 | af2 | af2 |
| Anodized aluminum | af1 | cf100 | cf100 | af1 | af1 |
| brass | cf100 | cf100 | cf100 | af1 | cf100 |
| Stainless steel | cf100 | cf100 | cf100 | af1 | cf100 |
| glass fiber reinforced epoxy | cf100 | cf100 | cf100 | af1 | cf100 |
| PA 6.6. | cf60 | af1 | af1 | af1 | af1 |
| Aluminum Magnesium Silicon alloy Al-Mg-Si-1 | af2 | af3 | af3 | af3 | af3 |

| | | | | | |
|---|---|---|---|---|---|
| ¹²: A2/1: 1 week at 23°C, 50% r.h.; A2/2: 2 weeks at 23°C, 50% r.h. | | | | | |

## Claims

1. A curable composition comprising
I. at least one silane-modified polymer obtainable by reacting
(A) at least one polymer terminated with amine groups at both ends, which polymer is selected from polyester, polyether polyols, poly(meth)acrylates, polyolefins, and/or copolymers of the aforementioned and has a molecular weight M_{w} between 250 and 10,000 Dalton,
(B) at least one cycloaliphatic diisocyanate compound, and
(C) at least one secondary aminosilane with two hydrolysable groups;
II. surface treated silica;
III. surface treated calcium carbonate;
IV. at least one additional aminosilane;
V. optionally, at least one adhesion promoter;
VI. optionally, at least one pigment;
VII. optionally, at least one catalyst;
VIII. optionally, at least one plasticizer.

2. The curable composition according to claim 1, wherein at least one polymer terminated with amine groups at both ends has the formula (E I)
H₂N-CHCH₃CH₂-(OCH₂CHCH₃)ₓₓ-(OCH₂CH₂)_{yy}-(OCH₂CHCH₃)_{zz}-NH₂ (E I)
wherein
at least one of xx, yy and zz is within the range from 1 to 250; preferably within the range from 2 to 100; more preferably within the range from 3-50.

3. The curable composition according to claim 2, wherein xx, yy and zz are, independently of one another, within the range of from 1 to 250; preferably within the range of from 2 to 100; more preferably within the range of from 3-50.

4. The curable composition according to any one of claims 1 to 3, wherein at least one polymer terminated with amine groups at both ends has a weight average molecular weight M_{w} within the range of from 500 to 10,000 Dalton, preferably within the range of from 1,000 to 7,000 Dalton, more preferably within the range of from 1,500 to 3,500 Dalton.

5. The curable composition according to any one of claims 1 to 4, wherein at least one polymer terminated with amine groups at both ends has an average amine hydrogen equivalent weight (AHEW) within the range of from 200 g/eq to 800 g/eq, preferably within the range of from 350 g/eq to 800 g/eq, more preferably within the range of from 500 g/eq to 650 g/eq.

6. The curable composition according to any one of claims 1 to 5, wherein at least one cycloaliphatic diisocyanate is selected from the group consisting of cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane (isophorone diisocyanate, IPDI), 2,4-hexahydrotoluylene diisocyanate, 2,6-hexahydrotoluylene diisocyanate, hexahydro-1,3-phenylene diisocyanate or hexahydro-1,4-phenylene diisocyanate; partially or completely hydrogenated cycloalkyl derivatives of benzidine diisocyanate, naphthalene-1,5-diisocyanate, xylylene diisocyanate (XDI), tetramethylxylylene diisocyanate (TMXDI), 1,3-phenylene diisocyanate, 1,4-phenylene diisocyanate, 2,4-toluylene diisocyanate (2,4-TDI), 2,6-toluylene diisocyanate (2,6-TDI), especially completely hydrogenated 2,4-TDI and 2,6-TDI (H6-2,4- and 2,6-TDI), 2,4'-diphenylmethane diisocyanate, 2,2'-diphenylmethane diisocyanate, 4,4'-diphenylmethane diisocyanate (MDI), especially completely hydrogenated MDI (H12-MDI), alkyl-substituted diphenylmethane diisocyanates, especially mono-, di-, tri-, or tetraalkyldiphenylmethane diisocyanate, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4-diisocyanate, 1-bromomethylphenyl-2,6-diisocyanate, 3,3'-bis-chloromethyl ether-4,4'-diphenyl diisocyanate; and mixtures of two or more of the named diisocyanates.

7. The curable composition according to claim 6, wherein the cycloaliphatic diisocyanate is selected from the group, 1-isocyanato-3,3,5-trimethyl-5-isocyanatomethylcyclohexane (isophorone diisocyanate, IPDI), completely hydrogenated 2,4-toluylene diisocyanate (H6-2,4-TDI), completely hydrogenated 2,6-toluylene diisocyanate (H6-2,6-TDI) and completely hydrogenated 4,4'-diphenylmethane diisocyanate (H12-MDI).

8. The curable composition according to any one of claims 1 to 7, wherein at least one secondary aminosilane has the formula (E II)
H-N(R'²)_{a'}(R'¹-SiXYZ)_{2-a'} (E II)
wherein
a' is 0 or 1;
R'¹ is a divalent hydrocarbon residue having 1 to 12 carbon atoms and linking the N and Si atom;
X, Y, Z are, independently of one another, selected from the group consisting of a hydroxyl group, a C₁ to C₁₂ alkyl, or a C₁ to C₁₂ alkoxy group with the proviso that if a' is 0 one of X, Y or Z is a hydrolysable group, preferably an alkoxy group; and if a' is 1 two of X, Y or Z are a hydrolysable groups, preferably alkoxy groups;
R'² is hydrogen or a hydrocarbon residue having 1 to 12 carbon atoms.

9. The curable composition according to any one of claims 1 to 8, wherein at least one secondary aminosilane is selected from the group consisting of N-(n-butyl)-3-aminopropylmethyldimethoxysilane, (N-2-aminoethyl)-3-aminopropylmethyldimethoxysilane, 3-aminopropylmethyldiethoxysilane, N-(n-butyl)-3-aminopropylmethyldimethoxysilane, 1-butanamino-4-(dimethoxymethylsilyl)-2,2-dimethyl, (N-cyclohexylaminomethyl)-methyldiethoxysilane, (N-phenylaminomethyl)-methyldimethoxysilane, 3-(N,N-dimethylaminopropyl)aminopropylmethyldimethoxysilane, and mixtures thereof.

10. The curable composition according to any one of claims 1 to 9, wherein at one silane-modified polymer is obtainable by reacting at least one amine terminated polyether polyol having a molecular weight M_{w} between 250 and 10,000 Dalton (A), at least one cycloaliphatic diisocyanate compound (B), and at least one secondary aminosilane with two a hydrolysable groups (C), in the presence of one plasticizer, and/or at least one catalyst.

11. The curable composition according to any one of claims 1 to 10, wherein the surface treated silica has a BET surface area of 10 to 250 m²/g.

12. The curable composition according to any one of claims 1 to 11, wherein the surface treated calcium carbonate comprises particles comprising a treatment layer on the surface of the calcium carbonate particles comprising
i. a phosphoric acid ester blend of one or more phosphoric acid mono-ester and salty reaction products thereof and/or one or more phosphoric acid di-ester and salty reaction products thereof, and/or
ii. at least one saturated aliphatic linear or branched carboxylic acid and salty reaction products thereof, and/or
iii. at least one aliphatic aldehyde and/or salty reaction products thereof, and/or
iv. at least one mono-substituted succinic anhydride consisting of succinic anhydride mono-substituted with a group selected from a linear, branched, aliphatic and cyclic group having a total amount of carbon atoms from at least C₂ to C₃₀ in the substituent and/or salty reaction products thereof, and/or
v. at least one polydialkylsiloxane, and/or
vi. mixtures of the materials according to i. to v.

13. The curable composition according to any one of claims 1 to 12, wherein
(i) the amount of said at least one silane-modified polymer is from 5 % by weight to 70 % by weight, preferably 15 % by weight to 50 % by weight, based on the total weight of the composition; and/or
(ii) the amount of said surface treated silica is from 0.01 % by weight to 10 % by weight, preferably 0.05 % by weight to 3 % by weight, based on the total weight of the curable composition; and/or
(iii) the amount of said surface treated calcium carbonate is to 1 % by weight to 80 % by weight by weight, preferably 20 % by weight to 50 % by weight, based on the total weight of the curable composition; and/or
(iv) the amount of said at least one additional aminosilane is 0.01 % by weight to 15 % by weight, preferably to 1 % by weight to 7.5 % by weight, based on the total weight of the curable composition; and/or
(v) the amount of said at least one catalyst is 0 % by weight to 5 % by weight, preferably 0.05 % to 2 % by weight, based on the total weight of the curable composition.

14. An adhesive, sealant, or coating material comprising the curable composition according to any one of claims 1 to 13.

15. Use of a curable composition according to any one of claims 1 to 13 as an adhesive, sealant, or coating material.
